Europäisches Patentamt

European Patent Office

Office européen des brevets

(11) Veröffentlichungsnummer : **0 073 307**
**B1**

(12) EUROPÄISCHE PATENTSCHRIFT

(45) Veröffentlichungstag der Patentschrift :
22.10.86

(21) Anmeldenummer : 82105191.9

(22) Anmeldetag : 14.06.82

(51) Int. Cl.⁴ : **G 01 G 21/24**, G 01 G 21/18

(54) Biegekoppel für Waagen.

(30) Priorität : 02.09.81 CH 5636/81

(43) Veröffentlichungstag der Anmeldung :
09.03.83 Patentblatt 83/10

(45) Bekanntmachung des Hinweises auf die Patenterteilung : 22.10.86 Patentblatt 86/43

(84) Benannte Vertragsstaaten :
DE FR GB IT NL

(56) Entgegenhaltungen :
FR-A- 2 266 152
FR-A- 2 296 841
US-A- 3 779 072
US-A- 4 280 577
**Die Akte enthält technische Angaben, die nach dem Eingang der Anmeldung eingereicht wurden und die nicht in dieser Patentschrift enthalten sind.**

(73) Patentinhaber : **Mettler Instrumente AG**
**CH-8606 Greifensee (CH)**

(72) Erfinder : **Strickler, Ernst**
**Bühlhofstrasse 29**
**CH-8633 Wolfhausen (CH)**

(74) Vertreter : **Jäger, Klaus et al**
**Mettler Instrumente AG Patentstelle**
**CH-8606 Greifensee (CH)**

Jouve, 18, rue St-Denis, 75001 Paris, France

## Beschreibung

Die vorliegende Erfindung betrifft einen Biegekoppel für Waagen, insbesondere für höher auflösende Waagen, mit wenigstens zwei Einspannenden, mit zwei parallelen Biegegelenken, und mit einem sich zwischen den Biegegelenken erstreckenden Steg von zumindest angenähert rechteckigem Querschnitt.

Ein derartiger Biegekoppel ist z. B. aus der US-Patentschrift 4 280 577 bekannt geworden. Er dient typischerweise zum Herstellen einer kraftübertragenden, in der Regel auf Zug beanspruchten Verbindung zwischen einem Lastaufnehmer und einem Uebersetzungshebel, insbesondere bei wegarmen Waagen (beispielsweise bei solchen mit elektromagnetischer Lastkopensation oder solchen mit einer schwingenden Saite als Messglied).

Biegekoppel der hier betrachteten Art sollen Biegegelenke mit einer möglichst kleinen Federkonstanten sowie mit möglichst genau definierter Biegelinie haben, wobei die Erfüllung dieser Forderungen umso wichtiger wird, je höher die Anforderungen an die Waage sind bezüglich Messgenauigkeit und Anzeigeauflösung. Dabei muss natürlich das Biegegelenk noch stark genug sein, um die erwarteten (Zug- oder gar Druck-) Kräfte in Längsrichtung des Koppels sicher übertragen zu können. Darüber hinaus sollte der Biegekoppel noch in der Lage sein, Einspannmomente der Befestigungsstellen aufzunehmen, und er sollte kleinere Massfehler in den Bauteilen und Verschiebungen aus Temperaturänderungen vertragen können — dies alles, ohne dass daraus Verspannungen und damit Verschlechterungen der Wägegenauigkeit resultieren.

Es lag nahe, zur Erfüllung dieser Forderungen, also zur Erzielung einer möglichst grossen Biegsamkeit auch in Querrichtung, ein Kreuzbiegegelenk in Betracht zu ziehen (wie es für Saitenwaagen beispielsweise aus der US-Patentschrift 3 779 072 bekannt wurde) oder aber wenigstens eine Verjüngung in Querrichtung vorzusehen, wie sie aus der eingangs erwähnten US-Patentschrift 4 280 577 bekannt ist, aber auch, für die Lenker eines Hebelwerks einer Waage, in der deutschen Offenlegungsschrift 24 48 554 offenbart ist.

Massnahmen der eben genannten Art vermochten jedoch nicht zu befriedigen. Ist die Federkonstante der Verjüngung in der Querrichtung grösser als diejenige des (Haupt-)Biegegelenks, so ist die Biegehärte in der Querrichtung zu gross — seitliche Kräfte oder Momente resultieren in einer Verspannung des Koppels. Ist die Federkonstante der Verjüngung in der Querrichtung dagegen gleich oder kleiner als diejenige des (Haupt-)Biegegelenks, so ergibt sich eine zu grosse Weichheit auch in der Haupt-Biegerichtung und daraus eine belastungsabhängige Verschiebung der Hauptbiegelinie, woraus Unlinearitäten resultieren.

Schliesslich wird, wenn die Federkonstante in Querrichtung kleiner ist, die Belastbarkeit in der Zug- bzw. Druckrichtung zu niedrig (Lastübertragung !).

Die vorliegende Erfindung resultierte also aus der Aufgabenstellung, einen Biegekoppel zu finden, der bei genügender (Druck- oder Zug-) Festigkeit in der Längsrichtung eine kleine Federkonstante der (Haupt-)Biegegelenke mit einer grossen Nachgiebigkeit in der Querrichtung verbindet, ohne dass infolge von Querbelastungen die Waagenfunktion beeinträchtigende Verschiebungen der Biegelinie und/oder Verspannungen auftreten.

Erfindungsgemäss wird hierzu vorgeschlagen, dass sich bei einem Biegekoppel der eingangs umschriebenen Art die kürzere der beiden Haupachsen des Stegquerschnitts parallel zu den Biegeachsen der Biegegelenke erstreckt. Diese Gestaltung bewirkt, dass der Steg in Querrichtung als Biegefeder wirkt, deren Federkonstante — je nach der Länge des Steges — sehr klein gehalten werden kann, sodass die gewünschte Nachgiebigkeit in Querrichtung ohne störende Nebeneffekte erreicht wird (die Biegehärte des Steges in der Ebene der Achsen der Biegegelenke ist kleiner als quer dazu).

In einer bevorzugten Auführungsform weisen mindestens der Steg und die Einspannenden gleiche Materialdicke auf. Dabei ist zweckmässigerweise zwischen dem Steg und den Einspannstellen je eine Verdrehung um 90 Grad vorgesehen. Diese Ausbildung hat den Vorteil einer besonders einfachen Herstellung, wobei von Blechstreifen geeigneten Materials ausgegangen werden kann.

Die Verdrehungen sind vorzugsweise zwischen dem Steg und den Biegegelenken angeordnet. Damit ist der Biegebereich in der Querrichtung eindeutig abgegrenzt und auf den Bereich zwischen den beiden (Haupt-)Biegegelenken beschränkt.

Mindestens bei höheren Auflösungen der Waage ist es zweckmässig, wenn an den Biegegelenken die Materialstärke reduziert ist. Mit geeigneten, vorzugsweise spanlos arbeitenden Verformungsmethoden lässt sich so die gewünschte niedrige Federkonstante sowie eine eindeutig positionierte Biegelinie recht genau erreichen.

Ein Ausführungsbeispiel der Erfindung wird nachstehend anhand der nicht massstäblichen Zeichnung erläutert. In der Zeichnung ist

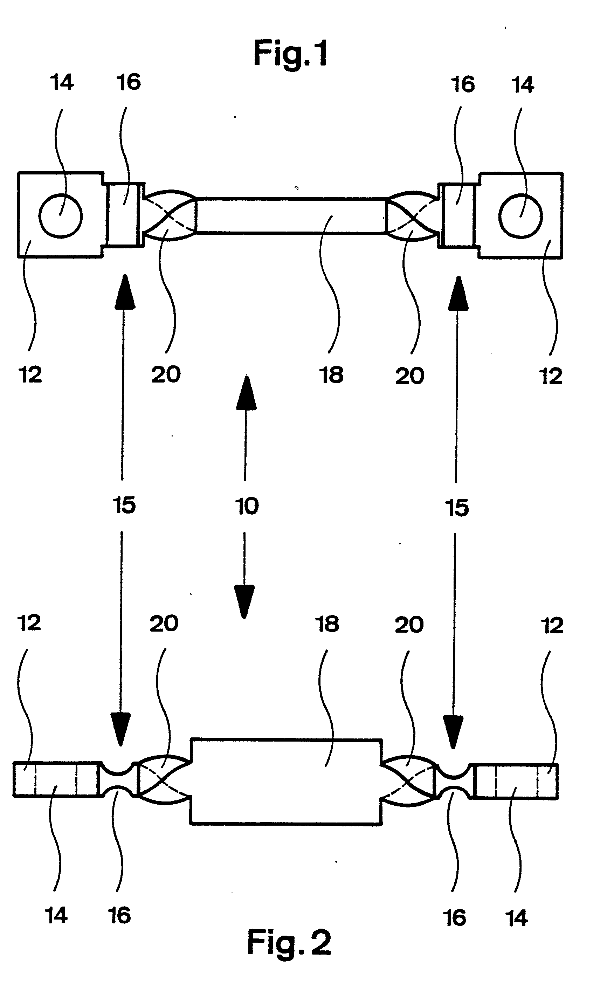

Figur 1   eine Draufsicht, und

Figur 2   eine Seitenansicht des Biegekoppels.

Der symmetrisch gestaltete Biegekoppel 10 ist aus einem Metallstreifen konstanter Materialstärke, beispielsweise aus einem Material mit weitgehender Unempfindlichkeit des Elastizitätsmoduls gegenüber Temperaturschwankungen, gefertigt. Zwei Einspannenden 12 weisen je ein Loch 14 zum Befestigen auf. Benachbart zu den Einspannenden 12 sind die Biegegelenke 15 angeordnet : Die Breite wurde etwas verringert, und symmetrische, bogenartige Verjüngungen 16 bewirken die gewünschte niedrige Federkonstante der Biegegelenke 15.

Der Mittelabschnitt des Biegekoppels 10 wird von einem Steg 18 gebildet, der auf der Ebene durch die Biegegelenke 15 und durch die Einspannenden 12 senkrecht steht. Zwischen dem Steg 18 und den Biegegelenken 15 befindet sich je eine Verdrehung 20 um 90 Grad, deren ursprüngliche Breite und Dicke der Materialstärke des Metallstreifens entspricht.

Die Herstellung des Biegekoppels erfolgt mittel geläufiger Techniken : Zuerst wird ein Rohling gestanzt. Sodann werden die Biegegelenke geformt, was z. B. durch Prägen erfolgen kann ; anschliessend wird der Biegekoppel eingespannt und der Steg 18 um 90 Grad verdreht. Daran mag sich noch ein Vergüten des fertigen Biegekoppels anschliessen.

Auf die Darstellung einer Waage einschliesslich des Einbaus des bzw. der Biegekoppel in eine Waage wurde verzichtet, da dies nichts zum Verständnis der Erfindung beigetragen hätte. Es darf in diesem Zusammenhang auf die vorveröffentlichte, oben genannte US-Patentschrift 4 280 577 verwiesen werden, welche einen typischen Anwendungsfall eines Biegekoppels der gattungsgemässen Art offenbart.

Die erfindungsgemässen Biegekoppel sind insbesondere, aber nicht ausschliesslich, für hochauflösende Präzisionswaagen geeignet.

Anders als im oben beschriebenen Ausführungsbeispiel könnte man auch von Rundmaterial ausgehen, dem dann durch z. B. Quetschen die gewünschten Formen verliehen werden. Auch sind Biegekoppel gemäss der Erfindung denkbar, deren Steg einen flachelliptischen Querschnitt hat.

Normalerweise werden die Biegekoppel über zwei Einspannenden verfügen. In manchen Fällen kann es jedoch zweckmässig sein, deren mehr vorzusehen (z. B. drei Einspannenden in V- oder U-Anordnung).

## Patentansprüche

1. Biegekoppel für Waagen, mit wenigstens zwei Einspannenden, (12), mit zwei parallelen Biegegelenken, (15) und mit einem sich zwischen den Biegegelenken erstreckendem Steg (18) von zumindest angenähert rechteckigem Querschnitt, dadurch gekennzeichnet, dass sich die kürzere der beiden Hauptachsen des Stegquerschnitts parallel zu den Biegeachsen der Biegegelenke (15) erstreckt.

2. Biegekoppel nach Anspruch 1, dadurch gekennzeichnet, dass der Steg (18) und die Einspannenden (12) gleiche Materialstärke aufweisen.

3. Biegekoppel nach Anspruch 1 oder 2, dadurch gekennzeichnet, dass zwischen dem Steg (18) und den Einspannenden (12) je eine Verdrehung (20) um 90 Grad vorgesehen ist.

4. Biegekoppel nach Anspruch 3, dadurch gekennzeichnet, dass die Verdrehungen (20) zwischen dem Steg (18) und den Biegegelenken (15) angeordnet sind.

5. Biegekoppel nach einem der vorangehenden Ansprüche, dadurch gekennzeichnet, dass an den Biegegelenken (15) die Materialstärke reduziert ist.

6. Biegekoppel nach Anspruch 1, dadurch gekennzeichnet, dass der Querschnitt des Stegs die Form einer flachen Ellipse aufweist.

## Claims

1. Flexible coupling member for balances, comprising at least two clamping end portions (12), two flexure joints (15) parallel to each other, and a bar (18) of at least approximately rectangular cross section extending between the flexure joints, characterized in that the shorter one of the two main axes of the bar cross section extends parallel to the bending axes of the flexure joints (15).

2. Flexure coupling member as in claim 1, characterized in that the bar (18) and the clamping end portions (12) have the same thickness.

3. Flexure coupling member as in claim 1 or claim 2, characterized in that between the bar (18) and each of the clamping end portions (12) there is provided a portion (20) twisted by 90 degrees.

4. Flexure coupling member as in claim 3, characterized in that the twisted portions (20) are arranged between the bar (18) and the flexure joints (15).

5. Flexure coupling member as in one of the preceding claims, characterized in that the material thickness is reduced in the flexure joints (15).

6. Flexure coupling member as in claim 1, characterized in that the cross section of the bar is in the form of a flat ellipse.

## Revendications

1. Couple flexible pour balances, comportant au moins deux extrémités d'encastrement (12), deux joints articulés de flexion (15) parallèles et, s'étendant entre les joints articulés de flexion, une entretoise (18) de section transversale au moins approximativement rectangulaire, caractérisé par le fait que le plus court des deux axes principaux de la section transversale de l'entretoise est parallèle aux axes de flexion des joints articulés de flexion (15).

2. Couple flexible selon la revendication 1, caractérisé par le fait que l'entretoise (18) et les extrémités d'encastrement (12) présentent une même épaisseur.

3. Couple flexible selon la revendication 1 ou 2, caractérisé par le fait qu'entre l'entretoise (18) et chaque extrémité d'encastrement (12) est prévue une torsion (20) de 90 degrés.

4. Couple flexible selon la revendication 3, caractérisé par le fait que les torsions (20) sont placées entre l'entretoise (18) et les joints articulés de flexion (15).

5. Couple flexible selon l'une des revendications précédentes, caractérisé par le fait qu'aux joints articulés de flexion (15) l'épaisseur est réduite.

6. Couple flexible selon la revendication 1, caractérisé par le fait que la section transversale de l'entretoise présente la forme d'une ellipse aplatie.

# Fig.1

# Fig. 2